(19) **Europäisches Patentamt**
**European Patent Office**
**Office européen des brevets**

(11) **EP 4 143 493 B1**

(12) **EUROPEAN PATENT SPECIFICATION**

(45) Date of publication and mention
of the grant of the patent:
**23.10.2024 Bulletin 2024/43**

(21) Application number: **21730327.0**

(22) Date of filing: **29.04.2021**

(51) International Patent Classification (IPC):
**F27B 3/10** *(2006.01)*       **F27B 3/18** *(2006.01)*
**F27D 27/00** *(2010.01)*

(52) Cooperative Patent Classification (CPC):
**F27D 27/00; F27B 3/10; F27B 3/18;** Y02P 10/20

(86) International application number:
**PCT/US2021/029802**

(87) International publication number:
**WO 2021/222505 (04.11.2021 Gazette 2021/44)**

(54) **SCRAP SUBMERGENCE DEVICE**

**SCHROTTEINTAUCHVORRICHTUNG**

**DISPOSITIF D'IMMERSION DE FERRAILLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2020 US 202063017409 P**

(43) Date of publication of application:
**08.03.2023 Bulletin 2023/10**

(60) Divisional application:
**24201084.1**

(73) Proprietor: **Novelis, Inc.
Atlanta, GA 30326 (US)**

(72) Inventors:
• **RAUCH, Edwin L.
Kennesaw, GA 30144 (US)**
• **STEVENS, Wesley Donald
Québec G0H0L7 (CA)**
• **KOSMICKI, Tina
Kennesaw, GA 30144 (US)**
• **DINSMORE, Steven W.
Kennesaw, GA 30144 (US)**
• **SALT, Stephen James
Guelph, Ontario N1C 1A3 (CA)**
• **NORTHERN, Donnie
Berea, NY 40403 (US)**
• **WAGSTAFF, Robert Bruce
Greenacres, WA 99016 (US)**

(74) Representative: **Weickmann & Weickmann
PartmbB
Postfach 860 820
81635 München (DE)**

(56) References cited:
**WO-A1-2015/042712      WO-A1-2019/045419
CN-A- 110 699 508      US-A1- 2011 074 072**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### REFERENCE TO RELATED APPLICATION

This application claims the benefit of U.S. Provisional Application No. 63/017,409, filed on April 29, 2020 and entitled SCRAP SUBMERGENCE DEVICE AND RELATED PROCESSES.

### FIELD OF THE INVENTION

The present disclosure relates to metallurgy generally and more specifically to devices and processes for furnaces, molten metal containment structures, and scrap submergence devices for mixing, conveying, treating and/or holding molten metals.

### BACKGROUND

It is desirable for a number of reasons to cause material (*e.g.*, aluminum) to flow in non-ferrous molten metal furnaces (such as a melting or holding furnace). In some cases, recycled material, such as used beverage cans (UBC) or other scrap, is melted before being combined with other sources of material before being cast as an ingot or other cast product.

Molten aluminum is a poor conductor of heat. Heat that reaches the surface of the material in the furnace is slow to reach an opposite surface of the material. Hotspots may develop on the surface increasing oxidation while solid metal stays relatively cold in other portions of the furnace. An unmixed volume of material may have a significant temperature difference between opposite sides (or between top and bottom). Stirring the material causes convection, which helps homogenize the temperature, that is, make it the same throughout. Mixing may also help melt the recycled material much faster. Mixing of solid metal into the molten bath results in high heat transfer and rapid melting of the solids. Simultaneous flux addition removes contaminants and oxides from the metal, resulting in improved metal quality and metal recovery.

### SUMMARY

The term embodiment and like terms are intended to refer broadly to all of the subject matter of this disclosure and the claims below. Statements containing these terms should be understood not to limit the subject matter described herein or to limit the meaning or scope of the claims below. Embodiments of the present disclosure covered herein are defined by the claims below, not this summary. This summary is a high-level overview of various aspects of the disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings and each claim.

US 2011/074072 A1 discloses a side well for a metal melting furnace. The side well includes an insulated body having a front wall forming a part of an insulated side wall of a metal melting furnace and a top. A cavity within the body includes a single upright well having a cylindrical wall adjacent to a closed bottom of the cavity, an entrance to the cavity at the top of the insulated body, a metal inlet channel leading directly into the cavity from an inlet aperture in the front wall, and a metal outlet channel leading directly from the cavity to a metal outlet aperture in the front wall. The side well includes a rotatable impeller having a vertical rotatable shaft and at least one vaned section positioned at a lower end of the rotatable shaft. The impeller extends into the cavity with its vaned section positioned in the well adjacent to the cylindrical wall.

WO 2015/042712 A1 discloses a dual-function impeller for rotation in molten metal in a direction of rotation, as part of a rotary injector. The impeller includes a body having an axis, multiple blades circumferentially interspaced around the axis, and an aperture coinciding with the axis.

CN 110 699 508 A discloses a blowing spiral stirrer for hot metal desulfurization, including a porous blowing head and a spiral stirring blade provided on a stirring shaft. The stirring blades of the spiral stirrer are uniform in size, revolve around each other around the stirring shaft, and are evenly spaced in the circumferential direction.

An aluminium metal furnace is known from WO 2019/045419 A1, including a heating chamber provided with a heating unit for heating molten aluminum. The furnace further includes a raw material supply unit for injecting aluminum scrap into the molten aluminum, a stirring unit for stirring the molten aluminum, and a flow of the molten aluminum flowing in from the heating chamber and a flow of the molten aluminum formed by the stirring unit in advance.

In view of the problems mentioned above in the state of the art devices/apparatus in this technical field, the present invention provides a scrap submerge device in accordance with the subject matter of independent claim 1.

According to certain embodiments not part of the present invention, a molten metal recycling system comprises: a furnace comprising a main hearth, a sidewell, and a divider wall separating the main hearth from the sidewell, wherein the divider wall comprises (i) an entrance port where molten metal enters the sidewell and (ii) an exit port where molten metal exits the sidewell; and a scrap submergence device for mixing molten metal in the furnace, the scrap submergence device comprising: an upper structure; a shaft extending down from the upper structure; and an impeller at a lower end of the shaft, wherein the impeller is arranged within the sidewell such that: a radial flow path of the impeller is offset approximately 1" to 5" (2.54 centimeter to 12.7 centimeter) from a deflector block; and a forward edge of the radial flow path of the impeller is aligned with an edge of the entrance port.

Other objects and advantages will be apparent from the following detailed description of non-limiting examples.

## BRIEF DESCRIPTION OF THE FIGURES

The specification makes reference to the following appended figures, in which use of like reference numerals in different figures is intended to illustrate like or analogous components.

FIG. 1 is a schematic side view of a scrap submergence device according to certain examples of the present invention.

FIG. 2A is a perspective view of a furnace.

FIG. 2B is a top view of a sidewell of the furnace of FIG. 2A.

FIG. 2C is a side view of the sidewell of FIG. 2B.

FIG. 2D is a top view of deflector block of the sidewell of FIG. 2B.

FIG. 2E is a top view of another example of a sidewell of the furnace of FIG. 2A.

FIG. 2F is a perspective view of the sidewell of FIG. 2A.

FIG. 3 is a perspective view of deflector block of the sidewell of FIG. 2B.

FIG. 4 is a perspective view of a scrap submergence device according to certain examples of the present invention.

FIGS. 5A, 5B, and 5C are perspective views of an impeller assembly of the scrap submergence device of FIG. 1.

FIG. 6 is a perspective view of an impeller assembly of the scrap submergence device of FIG. 1.

FIG. 7A is a top view of an impeller assembly of the scrap submergence device of FIG. 1.

FIG. 7B is a cross-sectional view of the impeller assembly of FIG. 7A.

FIG. 8 is a perspective view of an impeller assembly of the scrap submergence device of FIG. 1.

FIG. 9 is a schematic top view of an impeller assembly of the scrap submergence device of FIG. 1.

FIG. 10A is a bottom perspective view of an impeller assembly of the scrap submergence device of FIG. 1.

FIG. 10B is a top perspective view of an impeller assembly of the scrap submergence device of FIG. 1.

FIG. 10C is a bottom perspective view of an impeller assembly of the scrap submergence device of FIG. 1.

FIG. 11 is a top view of a furnace.

FIG. 12 is a sectional view of the furnace of FIG. 11 taken along line 12 - 12 in FIG. 11.

FIG. 13 is a sectional view of the furnace of FIG. 11 taken along line 13 - 13 in FIG. 11.

FIG. 14 is a top view of a portion of a sidewell of the furnace of FIG. 11.

FIG. 15 is a top view of a sidewell of a furnace.

FIG. 16 is a top view of a sidewell of a furnace.

## DETAILED DESCRIPTION

The subject matter of embodiments of the present disclosure is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described. Directional references such as "up," "down," "top," "bottom," "left," "right," "front," and "back," among others, are intended to refer to the orientation as illustrated and described in the figure (or figures) to which the components and directions are referencing.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g., 1 to 6.1, and ending with a maximum value of 10 or less, e.g., 5.5 to 10.

As used herein, the meaning of "a," "an," and "the" includes singular and plural references unless the context clearly dictates otherwise.

### Scrap Submergence Devices and Recycling Systems

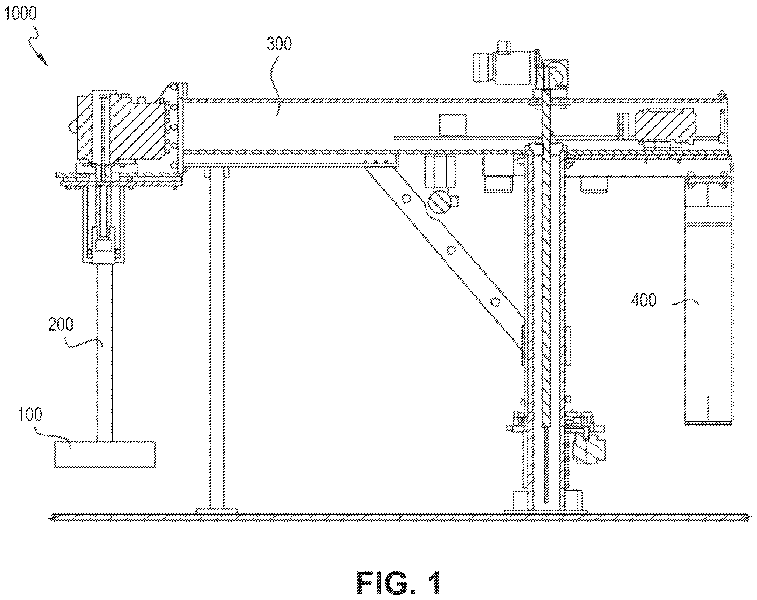

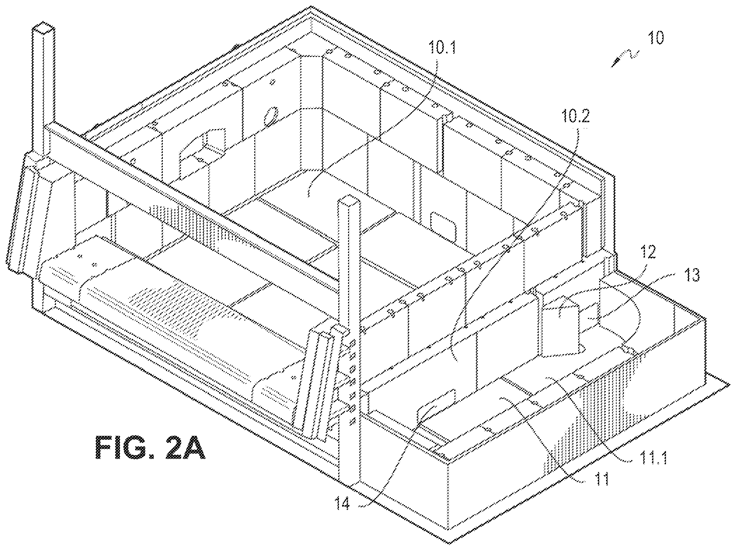

FIG. 1 illustrates a scrap submergence device 1000, which may include an impeller 100, a shaft 200, an upper structure 300, and a counterweight 400. The scrap submergence device 1000 is disposed adjacent to a furnace 10 (see FIG. 2A). The scrap submergence device 1000 may be combined with the furnace 10 as components of a recycling system. A controller (not illustrated) may be provided with the scrap submergence device 1000 and/or the recycling system and may be communicatively coupled to various components or subcomponents of the scrap submergence device 1000 and/or the recycling system (or other system utilizing the scrap submergence device 1000) to control various aspects of the scrap submergence device 1000 and/or the recycling system during use. As some non-limiting examples and as discussed in detail below, the controller may be utilized to control aspects of the scrap submergence device 1000 and/or the recycling system such as a mass flow rate, a rotational speed of the scrap submergence device 1000, a height of the scrap submergence device 1000 within molten metal, a height of the scrap submergence device 1000 relative to a surface of the furnace 10, an angle of the scrap submergence device 1000, a location of the scrap submergence device 1000 relative to other components, a pumping number of the impeller (which provides a measure of the efficiency of the impeller 100), a pumping rate of the impeller, combinations thereof, or other suitable aspects of the scrap submergence device 1000 and/or the recycling system.

In some cases, the scrap submergence device 1000 raises and lowers the impeller 100 and at least a portion of the shaft 200 into and out of a sidewell 11 of the furnace 10. The scrap submergence device 1000 may have an operating position where the impeller 100 is submerged in molten metal in the sidewell 11 and a retracted position where the impeller 100 is raised out of the sidewell 11 so it is not in contact with molten metal in the sidewell 11. As described in greater detail below, the impeller 100 includes at least one blade 101 such that the impeller 100 and blade(s) 101 rotate about an axis V of the shaft 200. The rotation of the impeller 100 and blade(s) 101 mixes and submerges shredded UBC or other scrap material in the molten aluminum within the sidewell 11.

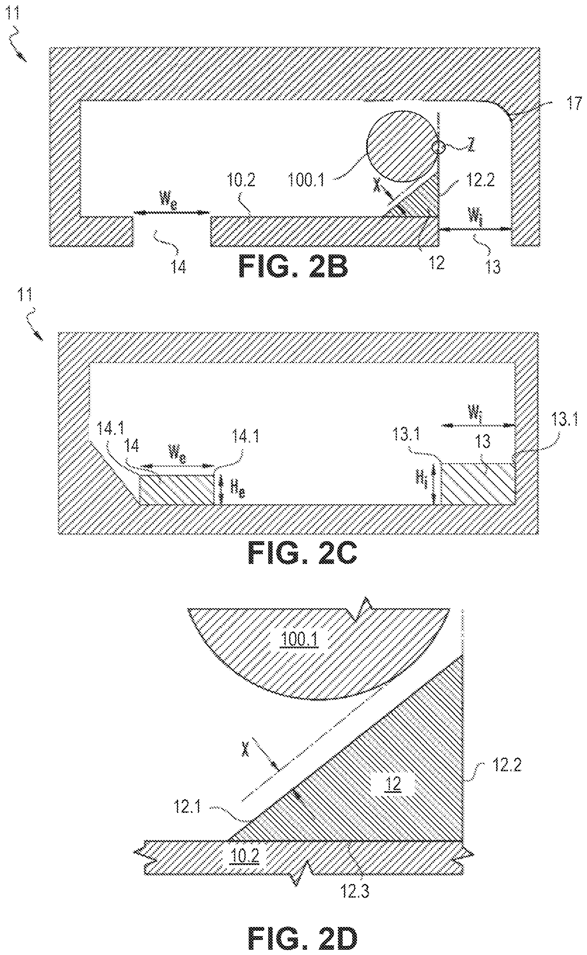

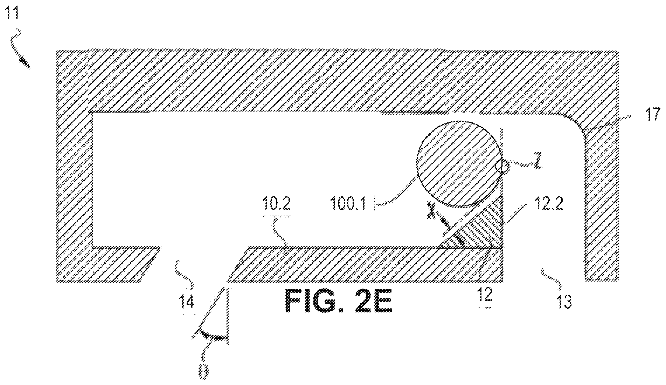

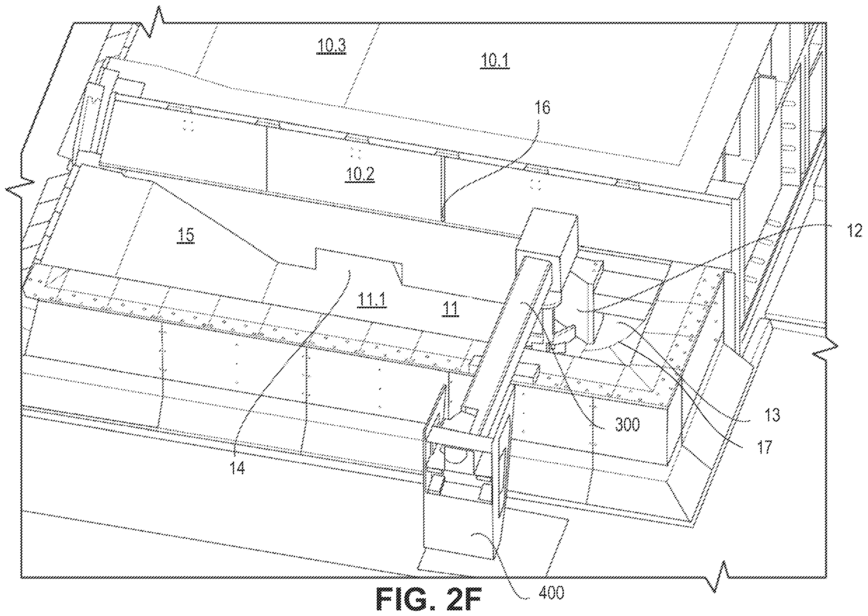

As shown in FIG. 2A, the furnace 10 may include a divider wall 10.2 separating a main hearth 10.1 of the furnace 10 from the sidewell 11. The divider wall 10.2 may include an entrance port 13 and an exit port 14 to allow molten metal to move between the main hearth 10.1 and the sidewell 11. The main hearth 10.1 may include a main hearth ramp 10.3 (see FIG. 2F). In some examples, the entrance port 13 is disposed near a deflector block 12. FIG. 2B shows a top view of the sidewell 11 and illustrates a radial flow path 100.1 created by the impeller 100 (i.e., showing the full motion path of the impeller 100). In some examples, the impeller 100 is disposed closer to the entrance port 13 than the exit port 14. The furnace 10 may contain molten aluminum that is at a temperature of approximately 700 °C to 900 °C, although other temperatures may be used. In various examples, and as best illustrated in FIGS. 2A, 2B, and 2E, a portion 17 of the sidewell 11 downstream from the entrance port 13 may optionally have a radiused surface. In certain aspects, the portion 17 of the sidewell 11 may be proximate to the deflector block 12. The radiused surface of the portion 17 may direct and/or promote flow of molten metal into the impeller 100 and may reduce potential dead zones in the molten metal (i.e., regions where the flow is reduced).

In some examples, the deflector block 12 may be attached to the divider wall 10.2 and may have an approximately flat surface 12.1 that faces the impeller 100 (FIG. 2D). As shown in FIG. 2D, the deflector block 12 may also have a leading surface 12.2 and a trailing surface 12.3. In some examples, the relative location between the impeller 100 and the deflector block 12 is controlled to optimize the flow of molten metal in the sidewell 11. For example, as shown in FIGS. 2B and 2D, a distance between the impeller 100 (or a blade 101 of the impeller 100) and the approximately flat surface 12.1 of the deflector block 12 is defined as distance X. In some cases, the forward-most point of radial flow path 100.1 of the impeller 100 (or a blade 101) (see point Z in FIG. 2B) is approximately aligned with the leading surface 12.2 of the deflector block 12. The leading surface 12.2 may also be aligned with one edge of the entrance port 13 such that the forward-most point of radial flow path 100.1 of the impeller 100 is aligned with an edge of the entrance port 13. In some examples, the distance X is approximately 0" to 10" (0 cm to 25.4 cm), although other distances may be used depending on the overall configuration and size of the furnace 10 and sidewell 11. In some cases, the distance X is approximately 1" to 5" (2.5 cm to 12.7 cm). In some examples, the distance X is approximately 3" to 4" (7.62 cm to 10.2 cm).

Optimizing the location of the impeller 100 relative to the deflector block 12 can affect at least one of the following: the mass flow of molten metal flowing into the sidewell 11 (in some cases, the metal will appear orange in color); the size of the vortex (which affects submergence efficiency such that scrap should be pulled downward but not so large as to create excess oxidation); the size of dross balls being produced, as explained in more detail below; and/or the pattern of flow of the molten metal within the sidewell 11. In addition, the optimum location of the impeller 100 may change over time due to erosion of the deflector block 12 and build-up of material in the sidewell 11. Based on erosion, in some cases, the impeller 100 (or at least one blade 101) should be replaced approximately every 10 to 40 days of operation. As shown in FIG. 2F, the sidewell 11 may include a hearth ramp 15 at an opposite end of the sidewell 11 from the impeller 100 beyond the exit port 14.

The entrance port 13 and the exit port 14 may each have dimensions and cross-sectional areas that optimize flow of molten metal through the sidewell 11 (see FIGS. 2B and 2C). In some examples, the entrance port 13 has an entrance width $W_i$ that is approximately 30" to 42" (76.2 cm to 106.7 cm) and an entrance height $H_i$ that is approximately 12" to 24" (30.5 cm to 61 cm), although other widths and heights are envisioned. In some cases, the entrance width $W_i$ is approximately 34" to 38" (86.4 cm to 96.5 cm) and the entrance height $H_i$ is approximately 16" to 20" (40.6 cm to 50.8 cm). The entrance width $W_i$ may be approximately 35.8" (91 cm) and the entrance height $H_i$ may be approximately 18.1" (46 cm). In some examples, the exit port 14 has an exit width $W_e$ that is approximately 30" to 42" (76.2 cm to 106.7 cm) and an exit height $H_e$ that is approximately 3" to 15" (7.62 cm to 38.1 cm), although other widths and heights are envisioned. In certain examples, the exit height $H_e$ is optionally less than the entrance height Hi. In various aspects, the exit height $H_e$ and the entrance height $H_i$ are each less than a lowest molten metal level within the furnace. In some cases, the exit width $W_e$ is approximately 34" to 38" (86.4 cm to 96.5 cm) and the exit height $H_e$ is approximately 7" to 11" (17.8 cm to 27.9 cm). The exit width $W_e$ may be approximately 35.8" (91 cm) and the exit height $H_{ie}$ may be approximately 9.1" (23 cm).

In some examples, the entrance port 13 has an entrance width $W_i$ that is approximately 42" (106.7 cm) and an entrance height $H_i$ that is approximately 21" (53.3 cm) where the upper corners may each include a fillet with a 4" radius (upper corners 13.1 as shown in FIG. 2C). In some cases, the exit port 14 has an exit width $W_e$ that is approximately 40" (101.6 cm) and an exit height $H_e$ that is approximately 16" (40.6 cm) where the upper corners may each include a fillet with a 4" radius (upper corners 14.1 as shown in FIG. 2C). As shown in FIGS. 2E and 2F, the exit port 14 may be angled at an angle θ relative to the divider wall 10.2 such that the exit port 14 is not perpendicular to the divider wall 10.2 and at least a portion of the flow through the exit port 14 is directed up the main hearth ramp 10.3. In certain cases, the entrance port 13 is substantially perpendicular to the divider wall 10.2, and the exit port 14 extends at the angle θ relative to the entrance port 13 such that a central axis of the exit port 14 is not parallel with a central axis of the entrance port 13. In some cases, the angle θ is from greater than about 0° to about 45°, although other suitable angles may be used. For example, in other cases, the angle θ is from about 10° to about 50°. In one non-limiting example, the angle θ is approximately 30°. In certain aspects, the angle θ may promote the flow of the molten metal back into the main hearth. In some aspects, the angle θ may depend on a volume or surface area of the sidewell 11 and a volume or surface area of the main hearth 10.1.

There may be a ratio between the area of the entrance port 13 and the area of the exit port 14. The areas for the entrance port 13 and the exit port 14 may be calculated based on the product of the respective width and the height, which are described above. In some examples, to optimize the circular flow within the sidewell 11, the area of the exit port 14 (exit width $W_e$ x exit height $H_e$) is smaller than the area of the entrance port 13 (entrance width $W_i$ x entrance height $H_i$). For example, the area of the exit port 14 may be approximately 50%-100% the area of the entrance port 13, such as from approximately 50%-90% the area of the entrance port 13. Constructing the exit port 14 to be smaller than the entrance port 13 may create back pressure in the sidewell 11 to allow for better stirring of the molten metal within the sidewell 11. In some cases, the area of the exit port 14 is approximately 70% to 80% of the area of the entrance port 13, although other ratios may be used. The area of the exit port 14 may be approximately 76% of the area of the entrance port 13. Based on experimentation, it has been determined that too large of an exit port 14 may produce low velocities in the main hearth 10.1 and high mass flow in sidewell 11. Too small of an exit port 14 may produce high velocities in the main hearth 10.1 and low mass flow in sidewell 11.

Compared to a sidewell 11 that does not include a deflector block, the addition of deflector block 12 may increase mass flow rate during operation of the scrap submergence device 1000, such as 20-30% or greater. In some cases, the addition of deflector block 12 increases mass flow rate during operation of the scrap submergence device 1000 by approximately 24.5%. This effect is because, without the deflector block 12, the impeller 100 causes a vortical flow just downstream of the entrance port 13, which reduces the mass flow rate as molten metal flow moves upward toward the free surface due to viscous dissipation and momentum transfer. Adding the deflector block 12 reduces the vortical flow just downstream of the entrance port 13 thus directing the molten metal more uniformly toward the impeller 100.

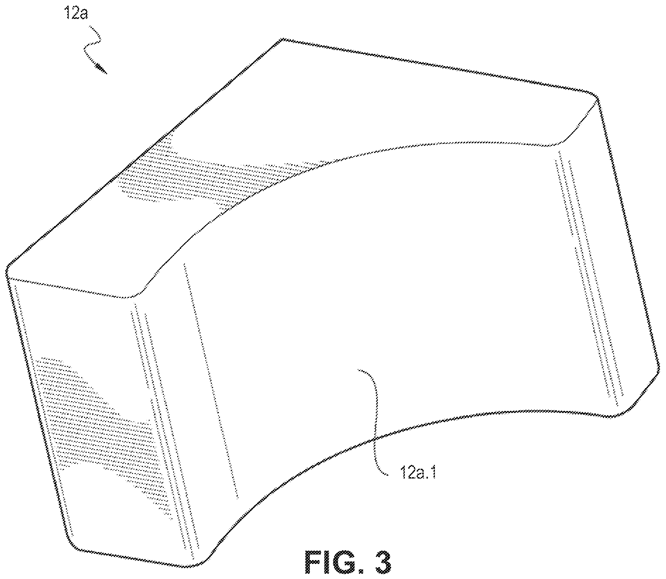

As shown in FIG. 3, in some examples, the deflector block 12 may be replaced with a curved deflector block 12a. The curved deflector block 12a is similar to the deflector block 12 except that the approximately flat surface 12.1 of the deflector block 12 (offset by distance X from impeller 100) is replaced with a curved surface 12a.1. In some cases, the curvature of the curved surface 12a.1 is not related to the curvature of the impeller 100. In other examples, the curvature of the curved surface 12a.1 approximately matches the curvature of the impeller 100 such that the curved surface 12a.1 is centered about the center of the impeller 100 and the radius of the curved surface 12a.1 is slightly larger than the radius of the impeller 100. Based on such a relationship between the curved surface 12a.1 and the impeller 100, in some cases, the offset distance between the curved surface 12a.1 and the impeller 100 (e.g., see distance X in FIGS. 2B and 2D) would be approximately constant along the length of the curved surface 12a.1. In some examples, the curved deflector block 12a has an improved service life compared to that of the deflector block 12.

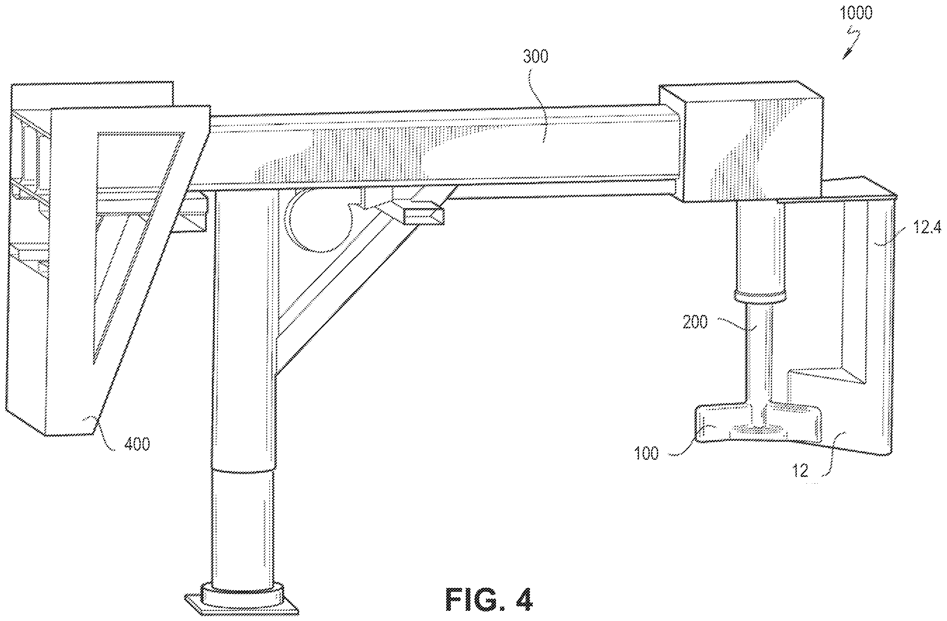

As illustrated in FIG. 4, the deflector block 12 (or deflector block 12a) may be attached to the scrap submergence device 1000 such that the deflector block 12 is removable from the sidewell 11 of the furnace 10. In some examples, an arm 12.4 extends from the upper structure 300 and the deflector block 12 is removably attached to the arm 12.4. In some examples, the arm 12.4 is removably attached to the upper structure 300. Based on this arrangement, the deflector block 12 can be replaced without emptying the furnace of molten metal (i.e., on the fly), which reduces down time and increases overall efficiency of the recycling process. In addition, mounting the deflector block 12 (or deflector block 12a) relative to the scrap submergence device 1000 allows for a repeatable, constant, and predictable location for the deflector block 12. As described above, in some cases, the relative location between the deflector block 12 (or deflector block 12a) and the impeller 100 affects the flow of molten metal and the overall efficiency of the recycling system.

In some cases, the material of the deflector block 12 (or deflector block 12a) includes a precast refractory composite material that includes low cement refractory slurry and stainless steel fiber or carbon fiber. In some examples, the material of the deflector block 12 (or deflector block 12a) includes a ceramic and a metal material. Oxide-based refractory materials have reasonable chemical/metallurgical resistance relative to molten aluminum, but may not have sufficient strength to sufficiently support the deflector block 12 (particularly when the deflector block 12 is attached to the scrap submergence device 1000 and separate from the furnace 10, as described above). In some cases, the deflector block 12 (or deflector block 12a) includes a metallic preform acting as a skeleton that is at least partially encapsulated by an oxide-based refractory material. The metallic preform may be steel, stainless steel, iron, cast iron, titanium, magnesium, Inconel, or any other appropriate material. In some cases, the metallic preform is 310 stainless steel. By encapsulating a metal alloy preform within an oxide-based refractory material, the block can be fabricated to have both the required mechanical strength and the required chemical/metallurgical resistance.

*Impeller Configuration and Materials*

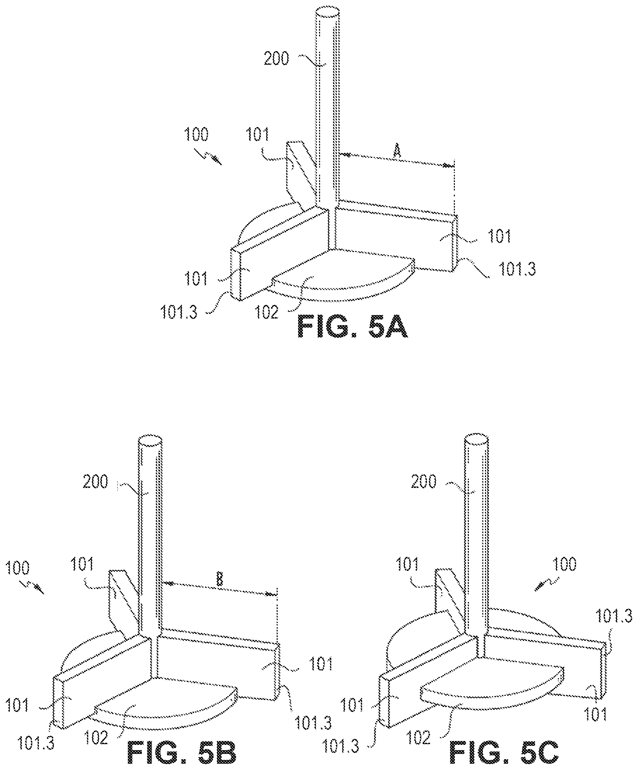

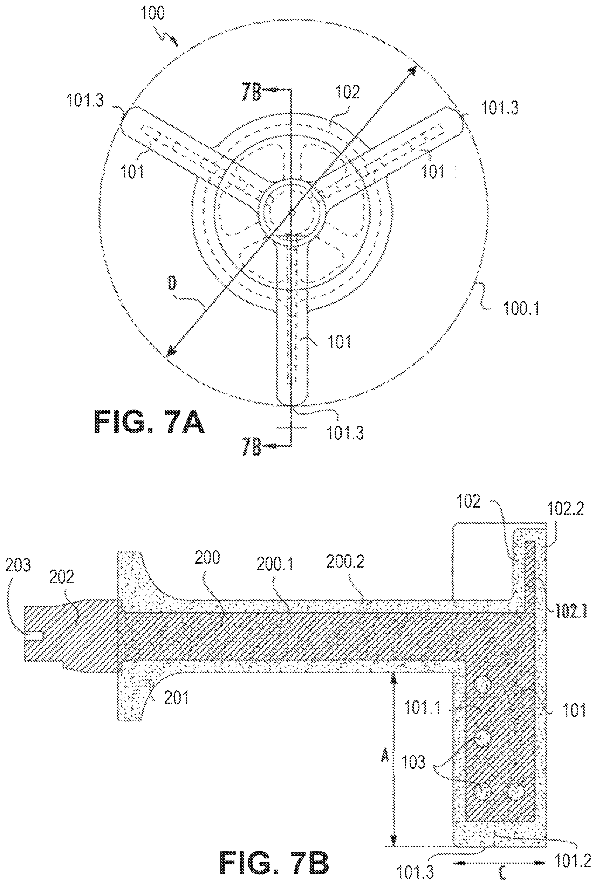

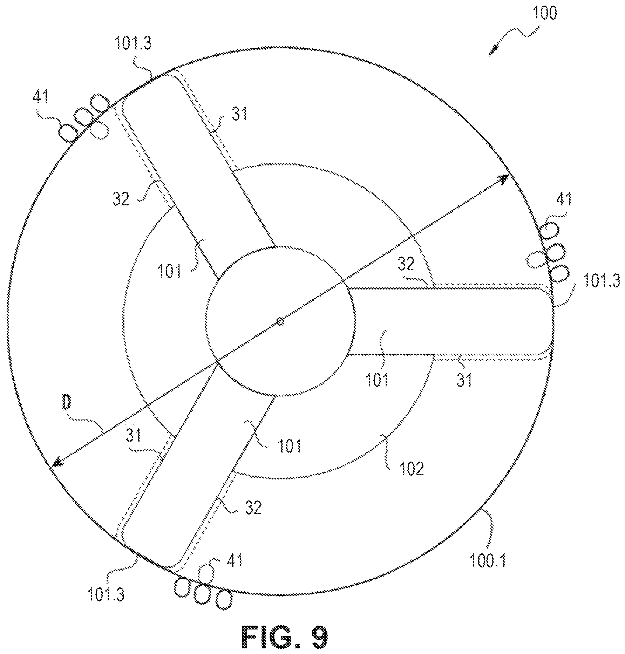

Various examples of impellers 100 are shown in FIGS. 5A-10C. Although the illustrated examples of the impellers 100 include three blades 101, the impeller 100 may include any number of blades 101 including as few as one. The impeller 100 may be attached near a lower end of the shaft 200 such that the blade(s) 101 extend radially from the shaft 200. In some examples, the impeller 100 includes a plate 102 that connects the blade(s) 101. As shown in FIGS. 5A and 5B, the plate 102 may be attached to the lower edge(s) of the blade(s) 101 such that a lower surface of the plate 102 is aligned with a lower surface of the blade(s) 101. In other examples, the plate 102 is attached to other portion(s) of the blade(s) 101. For example, as shown in FIG. 5C, the plate 102 may be attached approximately halfway between the lower edge(s) and the upper edge(s) of the blade(s) 101. The plate 102 may have any appropriate shape including, for example, triangular, rectangular, or square. As shown in FIGS. 5A-7A, the plate 102 may have a circular disk shape. The width/diameter of the plate 102 may be equal to the total diameter D of the blade(s) (see FIGS. 7A and 9) such that the plate 102 extends to an outermost edge of each blade 101 or, as shown in the drawings, the width/diameter of the plate 102 may be less than the total diameter D of the blade(s) 101 such that the plate 102 does not extend to an outermost edge of each blade 101. In some examples, the width/diameter of the plate 102 is approximately half of the total diameter D of the blade(s) 101. The plate 102 adds strength to the blades 101 and the impeller 100 as a whole while also minimizing upward vortices in the molten metal such that a downward vortex can be induced to help submerge and mix the recycled material (*e.g.,*

shredded UBC or other scrap).

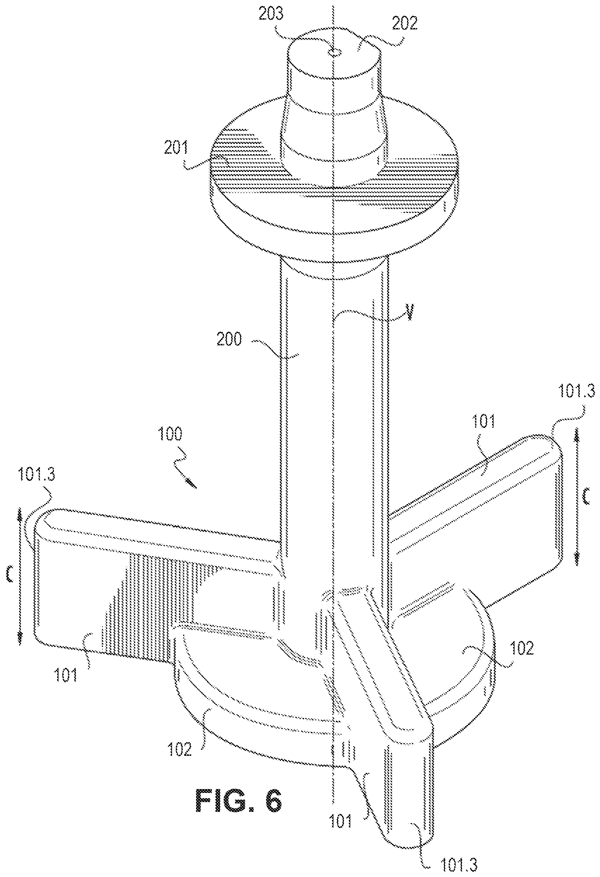

As shown in FIGS. 6 and 7B, the shaft 200 may include a shoulder 201 and a coupling 202. The coupling 202 allows the impeller 100 to be removably attached to the upper structure 300. The shoulder 201 protects the coupling 202 and reduces the splashes of molten metal that reach the coupling 202. In some examples, the coupling 202 includes a threaded hole 203 for attachment to the upper structure 300.

In some cases, the material of the impeller 100 and the blades 101 includes (1) an inner skeleton and (2) an outer coating where at least a portion of the inner skeleton is encapsulated by the outer coating. As shown in FIG. 7B, the inner skeleton may include a shaft skeleton 200.1, at least one blade skeleton 101.1, and a plate skeleton 102.1. The outer coating may include a shaft coating 200.2, at least one blade coating 101.2, and a plate coating 102.2. Each blade skeleton 101.1 may include at least one hole 103 such that the material of the outer coating flows through the at least one hole 103 to enhance the strength/integrity of the attachment between the inner skeleton and the outer coating. In some examples, the inner skeleton is steel, stainless steel, iron, titanium, magnesium, Inconel, or any other appropriate material. In some cases, the inner skeleton is cast iron. The outer coating may be a refractory composite material that includes low cement refractory slurry and a metal material (*e.g.*, stainless steel fibers or needles). In some examples, the material of the impeller 100 and the blades 101 includes a ceramic and a metal material. In some cases, the material of the impeller 100 and the blades 101 includes approximately 5% to 50% stainless steel needles. The stainless steel may include 310 stainless steel or any other appropriate stainless steel.

*Impeller/Blade Shape and Performance*

In some examples, the scrap submergence device 1000 creates agitation in the sidewell 11, which aids in mixing and melting the recycled material with the molten metal. The impeller 100 may be inserted into the molten metal and rotated to cause both bulk motion and small-scale motion eddies in the molten metal adjacent each impeller blade 101 (assuming turbulent flow). Mechanical energy is required to rotate the impeller 100 which transmits energy into the molten metal.

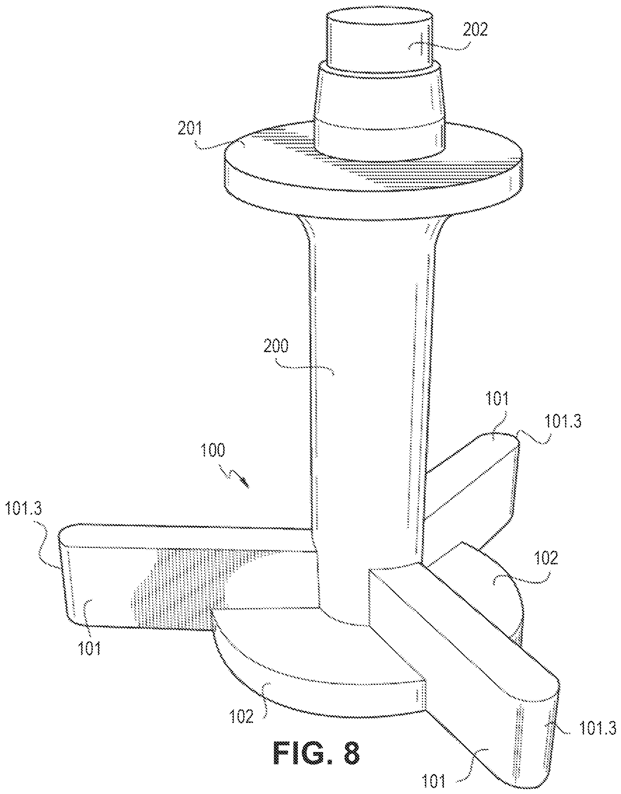

The impeller 100 may be designed to cause primarily radial flows in the molten metal because each blade 101 is designed such that a central plane of the blade 101 intersects (and/or is coplanar with) the axis V of the impeller 100 (*see* FIG. 6). Radial flow described herein refers to flows that occur within a plane that is perpendicular to the axis V of the impeller 100. Alternative impeller configurations include, for example, pitched blades (which would not have a central plane of the blade 101 that intersects or would not be coplanar with the axis V of the impeller 100). Pitched blade configurations would create flows with more axial components such that more significant portions of the flow would be parallel to the axis V of the impeller (*e.g.*, a boat propeller). FIG. 8 shows another example of an impeller 100 where the diameter of the shaft 200 of the impeller 100 changes along its length. As shown in FIG. 8, the diameter of the shaft 200 may taper such that the diameter increases near the shoulder 201.

FIG. 9 shows a schematic top view of an impeller 100 that includes three blades 101. Clockwise rotation of the impeller 100 creates increased (positive) pressure in the molten metal adjacent to the leading face 31 of each blade 101 and decreased (negative) pressure in the molten metal adjacent to the trailing face 32. As the impeller 100 rotates, fluid (molten metal) flows along the surface of each blade 101 in the radial direction around the outermost tip 101.3 (or outermost edge) of the blade 101, the fluid mixes with other fluid having a lower velocity, which may create free vortices 41. Because the impeller 100 is submerged (closer to the floor 11.1 of the sidewell 11 than the surface of the molten metal, as described below), at least some of the fluid is pulled downward toward the impeller 100. This downward flow may be observed such that recycled material (e.g., shredded UBC or other scrap) is pulled downward from the surface of the molten metal. In some cases, the downward flow also includes vortices that are centered around the shaft 200 and/or axis V (*see* FIG. 6). In addition to flow that moves in the radial direction around the outermost tip 101.3 of the blade 101, each blade 101 may also induce tangential flow that moves over the upper edge of the blade 101 or over the lower edge of the blade 101 (such as from the leading face 31 of the blade 101 to the trailing face 32 of the blade 101). In some cases, the flow over the top and/or bottom of the blade 101 creates linear vortices. In some non-limiting examples, for blades 101 that have a height C (*see* FIG. 6) equal to less than approximately 10", the flow is approximately balanced between portions that flow over the top of the blade 101 and portions that flow under the blade 101. In some non-limiting examples, blades 101 that have a height C equal to greater than approximately 10", a higher percentage of the flow is moves over the top of the blade 101 compared to the flow that moves under the blade 101. In some cases, increased blade height (*i.e.,* height C) leads to increased vorticity at the trailing face 32 of the blade 101, which draws in additional molten metal from the leading face 31 of the subsequent blade resulting in increased downward submergence at the uppermost surface of the metal.

In some cases, flows moving toward the bottom of the blade 101 (due to the distance between the bottom of the blade 101 and the floor 11.1 of the sidewell 11) are re-directed upwards from the trailing face 32 to the leading face 31 of the next blade 101 and over the top. In addition, some of the flow moving toward the bottom of the blade 101 interacts with the plate 102 and is redirected to the lower radial tip of the blade 101 (*i.e.*, the bottom of outermost tip 101.3) which increases overall efficiency.

The dimensionless pumping number provides a measure of the efficiency of the impeller 100. In some examples, the pumping number $N_p$ is defined as:

$$N_p = \frac{Q}{N*D^3}$$

where Q is the impeller pumping rate ($m^3$/minute), N is the speed (RPM) of the impeller, and D is the diameter (meter) of the impeller.

The shape of the impeller 100, including the blade(s) 101, can be adjusted to optimize efficiency of the scrap submergence device 1000. For example, the radius of each blade or the length (radial dimension) from the outer surface of the shaft 200 to the outermost tip 101.3 of each blade 101 (*see* radii A and B in FIGS. 5A, 5B, and 7B) can be changed to accommodate characteristics of the particular furnace 10 and/or to optimize performance of the scrap submergence device 1000. In some cases, as shown in FIG. 5A, the radius A is approximately 14" to 18" (35.6 cm to 45.7 cm), although other suitable dimensions can be used. The overall diameter of the impeller may be approximately 32" to 38" (81.3 cm to 96.5 cm), although other suitable diameters can be used. In some examples, the radius A is approximately 16" (40.6 cm), and the total diameter D of the impeller is approximately 35" (88.9 cm) although other suitable dimensions can be used. The radius A may be approximately 14.5" (36.8 cm). In some cases, as shown in FIG. 5B, the radius B is approximately 10" to 14" (25.4 cm to 35.6 cm) although other suitable lengths can be used. The total diameter D of the impeller may be approximately 24" to 30" (61 cm to 76.2 cm) although other suitable dimensions can be used. In some examples, the radius B is approximately 12" (30.5 cm), and the total diameter D of the impeller is approximately 27" (68.6 cm). The diameter of the shaft 200 may be approximately 1" to 5" (2.54 cm to 12.7 cm) although other suitable dimensions can be used. In some examples, the diameter the of shaft 200 is approximately 3" (7.62 cm). In some cases, the diameter of the shaft 200 is approximately 6" (15.2 cm). As shown in FIG. 8, in some cases, the diameter of the shaft 200 varies along the length of the shaft and generally increases when moving up toward the shoulder 201.

The height (vertical dimension) of each blade 101 can also vary to suit specific needs for a particular furnace 10 and/or to optimize performance of the scrap submergence device 1000. In some cases, the height C (*see* FIGS. 6 and 7B) is approximately 5" to 16" (12.7 cm to 40.6 cm), although other suitable heights may be used. In some examples, the height C is approximately 7.75" (19.7 cm). In some cases, the height C is approximately 10" (25.4 cm). In some examples, the height C is approximately 13" (33 cm). In some cases, increasing the height of the blade 101 causes better results related to mass flow rate through the sidewell 11 and the ability to mix and melt solid pieces of recycled material in the molten metal. Increasing the height of the blade 101 may also contribute to stronger vortices both in the sidewell 11 and in the main hearth 10.1, which improves the melting rate. The vortices formed near the entrance port 13 may contribute to reduced mass flow rate through the sidewell 11 and the formation of such vortices may increase with blade height. In some examples, when various factors (*e.g.*, geometry, impeller speed, *etc.*) are adjusted, the mass flow rate through the entrance port 13 pulsates such that a combination of impeller geometry, impeller position, deflector block position, and molten metal level can excite a resonance behavior, which causes a corresponding increase in furnace performance. In some cases, higher velocities closer to the floor 11.1 and under the impeller 100 may increase the flow through the sidewell 11.

The ratio of blade height C to blade radius (*i.e.*, radius A or radius B) may be approximately 0.43 to approximately 1.14, or other suitable ratios. The present invention discloses that the ratio of blade height C to blade radius is 0.3 to 1, such as approximately 0.5 to approximately. In some cases, the ratio of blade height C to blade radius is approximately 0.9.

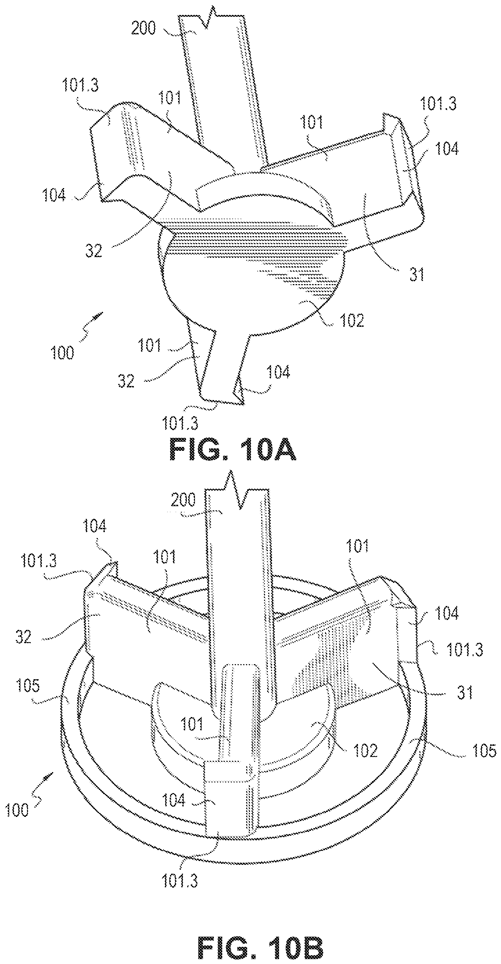

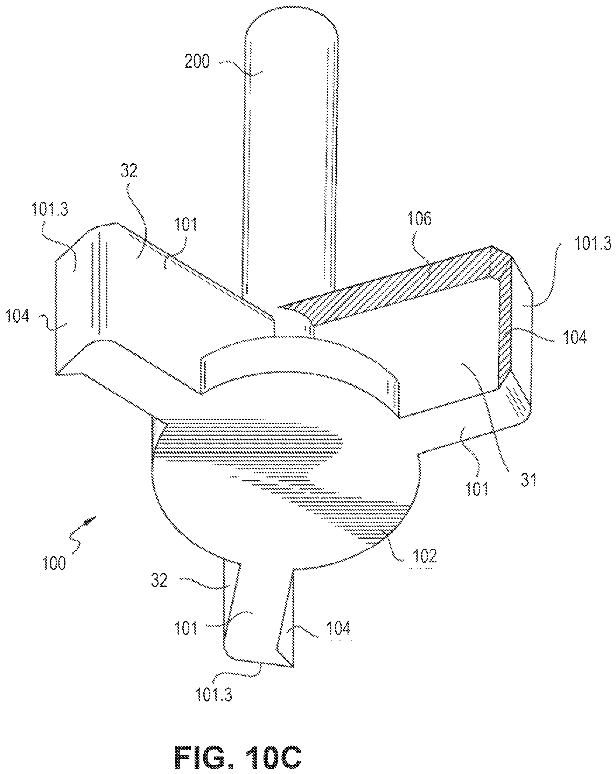

As shown in FIG. 10A-10C, the blades 101 includes additional features designed to increase efficiency of the molten metal flow adjacent to the impeller 100. The blade 101 includes a radial extension 104 at the outermost tip 101.3. The radial extension 104 extends in a tangential direction from the leading face 31 of the blade 101. The radial extension 104 decreases the losses at the outermost tip 101.3 (associated with the free vortices) thus increasing the pumping number. In some examples, the radial extension 104 has a sharp knife edge at the tip of the leading face 31. As shown in FIG. 10B, the impeller 100 may include a ring 105 extending around a full perimeter of the impeller 100 that attaches to the outermost tip 101.3 of each blade 101. In some cases, as illustrated, the ring 105 is attached to the bottom of outermost tip 101.3 and provides reinforcement for this portion of the blade 101. As shown in FIG. 10C, a blade 101 may include an upper extension 106 at the upper edge of the blade 101. The upper extension 106 may extend in an approximately tangential direction from the leading face 31 of the blade 101. The upper extension 106 may decrease the losses at the upper edge of the blade 101 thus increasing the pumping number. In some examples, the upper extension 106 has a curved geometry, a peaked geometry or a sharp knife edge at the tip of the leading face 31. Although FIG. 10C illustrates an example that includes both the upper extension 106 and the radial extension 104 but does not include the ring 105, the impeller 100 may include any combination of these features (*e.g.*, any combination of one, two, or all three of these features). The configuration of FIG. 10C, where the radial extension 104 extends along the side of the blade 101 and the upper extension extends along the upper edge of the blade 101, increases pressure on the molten metal as the impeller 100 rotates.

## Salt and Dross Formation

The addition of salt flux (also referred to as salt) to the sidewell 11 of the furnace 10 increases the efficiency of the furnace 10 and the recycling process. The salt may be added through a salt feed tube 16 (*see* FIG. 2F). In some examples, the salt feed tube 16 is located at the divider wall 10.2 between the entrance port 13 and the exit port 14. In some cases, the salt may be mixed with shredded material. In some cases, the salt may be added through a hollow impeller. In such an example, the shaft of the impeller may be hollow and may allow for salt to be injected by the hollow shaft. In some cases, the amount of salt added is approximately 1% to 3% of the charge input weight. In some examples, the amount of salt added is approximately 2% to 5% of the charge input weight. In some cases, the amount of salt added is approximately 2% of the charge input weight.

To maximize efficiency in the recycling process, impurities (such as dross) should be removed from the molten metal, to the extent possible while simultaneously minimizing the amount of molten metal removed from the furnace. The scrap submergence device 1000 and the related fluid flow created by the scrap submergence device 1000 circulates the molten metal and causes the dross to accumulate. In some cases, the dross accumulates in the form of spherical shapes (also referred to as dross balls). The dross balls may primarily contain salts, oxides, oxide skins, spinel, and silicates. In some cases, salt flux input should be adapted based on the characteristics of the dross balls such that (i) if the dross balls are completely covered in molten metal (e.g., aluminum), more salt is needed and (ii) if the dross balls are completely dewetted of aluminum, salt addition should be suspended. Excessive salt can lead to dross balls sticking and clumping together. The salt may have a lower melting point (approximately 657°C) compared to that of the molten metal. However, when added to the furnace, the salt does not immediately break down and/or melt. Adding salt to the dross layer gives the salt time to melt near the recycled material at the impeller 100 to start producing dross balls. In some examples, the frequency and location of the salt additions can also affect efficiency of the recycling process. In some cases, the salt includes NaCl and/or KCl and may also include an active fluoride component. In some examples, the salt includes 47.5% sodium chloride, 47.5% potassium chloride, and 5% cryolite.

To optimize the dross balls (*i.e.*, maximize the impurities removed from the furnace while also minimizing the molten metal removed from the furnace), in some cases, the dross balls are pushed into the vortex created near the impeller 100 at least once after being formed, which increases the amount of oxides collected in each ball. In some examples, the dross balls accumulate near the hearth ramp 15 of the sidewell 11 (*see* FIG. 2F). The diameter of the dross balls may be approximately 0.3" to 2.5" (0.76 cm to 6.35 cm), although other sizes are envisioned. In some examples, the average dross ball size is approximately 1" to 2" (2.5 cm to 5 cm). In some cases, the average dross ball size is approximately 1". Size of the dross ball may be affected by quantity of salt input, magnitude of gap between the impeller 100 and the deflector block 12, rotational speed of the scrap submergence device 1000, and other factors. In some examples of molten aluminum furnaces as disclosed herein, the dross balls contain small amounts of aluminum, in some cases, approximately 3% aluminum. In some examples, the dross balls contain 3%-15% aluminum. In some cases, the dross balls contain 5%-7% aluminum. This is significantly lower than dross from conventional aluminum furnaces (e.g., that include a circulation pump and a separate mixing device), where dross collected will include 35%-85% aluminum. These conventional furnaces may produce dross but do not produce dross balls. Dross balls are easy to handle and separate from molten metal (compared to dross collected in conventional furnaces) because of their lower aluminum amount. In addition, dross balls do not fume or thermite. In some cases, the average composition of the dross balls is: 65% solids (including, for example, spinel, aluminum oxide, silicates), 8% aluminum, 25% salt (for example, NaCl, KCl, trace fluoride), 2% $Al_4C_3$, and AlN may or may not be detected. The significantly lower amount of aluminum in the dross balls compared to conventional dross reduces the cost and energy required for producing aluminum.

The dross balls may accumulate and form a deep layer of dross balls near the hearth ramp 15. The area adjacent to the impeller 100 may have the lowest concentration of dross balls or a thin layer of dross balls. The volume of molten metal within the furnace 10 may be controlled such that the surface of the metal (where the dross balls are located) remains above the exit port 14 to prevent the dross balls from moving into the main hearth 10.1. During operation of the scrap submergence device 1000, it may be helpful to remove the larger dross balls while leaving the smaller balls because the smaller balls are more effective in removing oxides and absorbing salt. The dross balls are larger at the bottom of the dross layer. Therefore, to remove the larger dross balls, it may be necessary to push the small dross ball layer on the surface aside to expose the larger balls underneath.

*Speed and Position of Impeller*

During operation of the scrap submergence device 1000, location and rotational speed of the impeller 100 can be adjusted to optimize mixing and overall efficiency of the recycling process. In some cases, the speed of the impeller 100 is varied based on the amount of metal in the furnace. In some cases, the speed of the impeller 100 may be from 40-100 RPM. When the amount of molten metal in the furnace is low, the impeller 100 is located lower within the sidewell 11 (i.e., closer to the floor 11.1 of the sidewell 11). As the volume of molten metal in the furnace increases, the impeller 100 is raised away from the floor 11.1. The rotational speed of the impeller 100 will also need to increase with increased volume of molten metal. In one non-limiting example, in some cases where recycled material (e.g., shredded UBC or other scrap) is added to the furnace at a rate of approximately 19,000 lb/hr, for a depth of approximately 31" (78.7 cm) of molten metal, the impeller 100 may rotate at approximately 58-60 RPM, although other speeds may be utilized. In another non-limiting example, in some cases, for a depth of approximately 35" (88.9 cm) of molten metal, the impeller 100 may rotate at approximately 67-69 RPM (at the same feed rate of approximately 19,000 lb/hr), although other speeds may be utilized. The speed of the impeller 100 may also need to increase with higher feed rates. In one non-limiting example, in some cases where recycled material (e.g., shredded UBC or other scrap) is added to the furnace at a rate of approximately 24,000 lb/hr to 29,000 lb/hr, for a depth of approximately 28" (71.1 cm) of molten metal, the impeller 100 should rotate at approximately 63-67 RPM, although other speeds may be utilized. In another non-limiting example, in some cases, for a depth of approximately 32" (81.3 cm) of molten metal, the impeller 100 should rotate at approximately 67-71 RPM (at the same feed rate of approximately 24,000 lb/hr to 29,000 lb/hr), although other speeds may be utilized. The higher feed rate (approximately 24,000 lb/hr to 29,000 lb/hr) causes more shredded material to be present on the surface of the molten metal, which has a stabilizing effect resulting in fewer vortices formed and less splashing at the surface of the molten material thus allowing for higher rotational speeds for the impeller 100. In some examples, for a given feed rate, the maximum rotational speed of the impeller 100 and the depth of molten metal in the sidewell 11 have an approximately linear relationship. In various cases, the rotational speed of the impeller 100 may be controlled based on a depth of the molten metal in the sidewell 11. In some examples, the rotational speed of the impeller 100 may optionally be increased when the depth of the molten metal is higher and may optionally be decreased when the depth of the molten metal is lower. In some cases, the bottom of the impeller 100 is located approximately 2" to 10" (5.1 cm to 25.4 cm) from the floor 11.1 of the sidewell 11. In some examples, the bottom of the impeller 100 is located approximately 6" (15.2 cm) from the floor 11.1 of the sidewell 11. In other words, the impeller 100 is typically arranged such that the center of the height of the impeller 100 is located below the halfway point of the depth of the molten metal (i.e., the impeller is submerged below the center of the depth of the molten metal).

In some cases, a height of the impeller 100 above a floor of the sidewell 11 (or a distance from the floor of the sidewell 11 to the impeller 100) may be controlled based on the amount of molten metal in the sidewell 11. As a non-limiting example, the impeller 100 may be controlled such that the height of the impeller 100 is increased when the amount or depth of the molten metal in the sidewell 11 is higher and decreased when the amount or depth of the molten metal in the sidewell 11 is lower.

In addition, the location of the impeller 100 relative to the deflector block 12 (or deflector block 12a) may also need to change during operation of the scrap submergence device 1000. For example, as material accumulates or builds up on the various surfaces in the sidewell 11, the impeller 100 may need to move away from the deflector block 12 (or deflector block 12a) to ensure optimum offset between these components (*e.g.*, distance X described above).

A method of operating the scrap submergence device 1000 with a furnace 10 may include adding molten metal to the furnace 10, inserting the impeller 100 into the molten metal in the sidewell 11, adding recycled material into the sidewell, and rotating the impeller 100 about its vertical axis V. In some embodiments, salt flux may added in proportion to the amount of recycled material. A deflector block 12 (or deflector block 12a) may be arranged relative to the impeller 100 and/or relative to an entrance port 13 in the divider wall 10.2 between the main hearth 10.1 and the sidewell 11. In some cases, the deflector block 12 (or deflector block 12a) may be attached to the divider wall 10.2 while in other examples, the deflector block 12 (or deflector block 12a) is attached to an arm 12.4 that extends down from the upper structure 300.

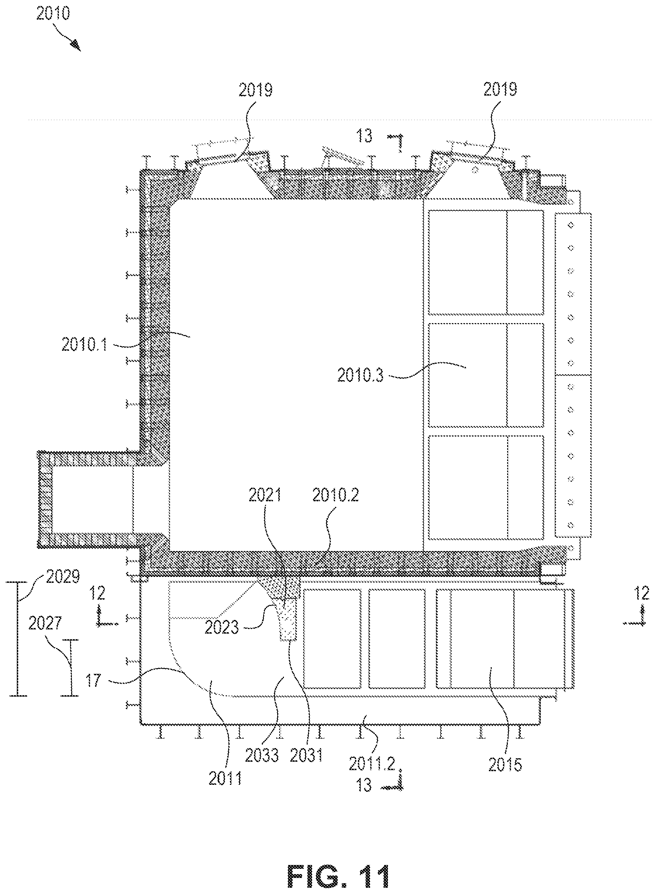

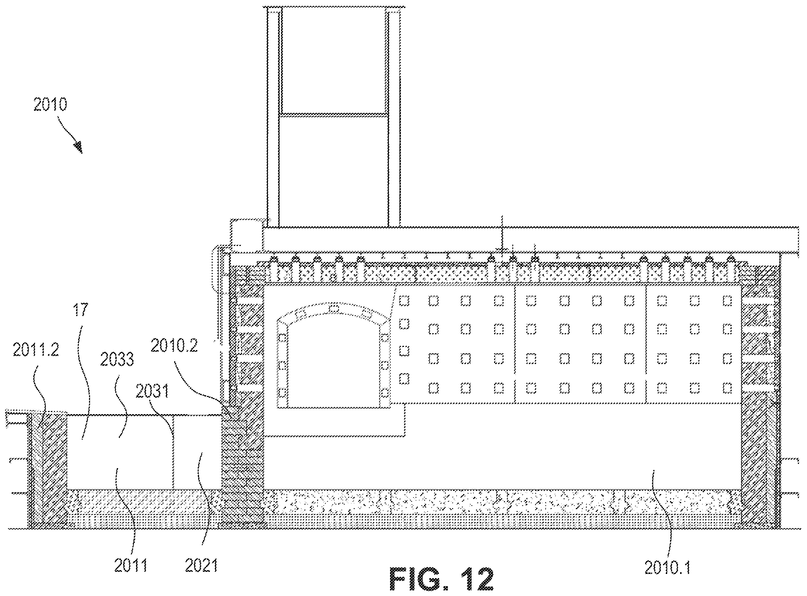

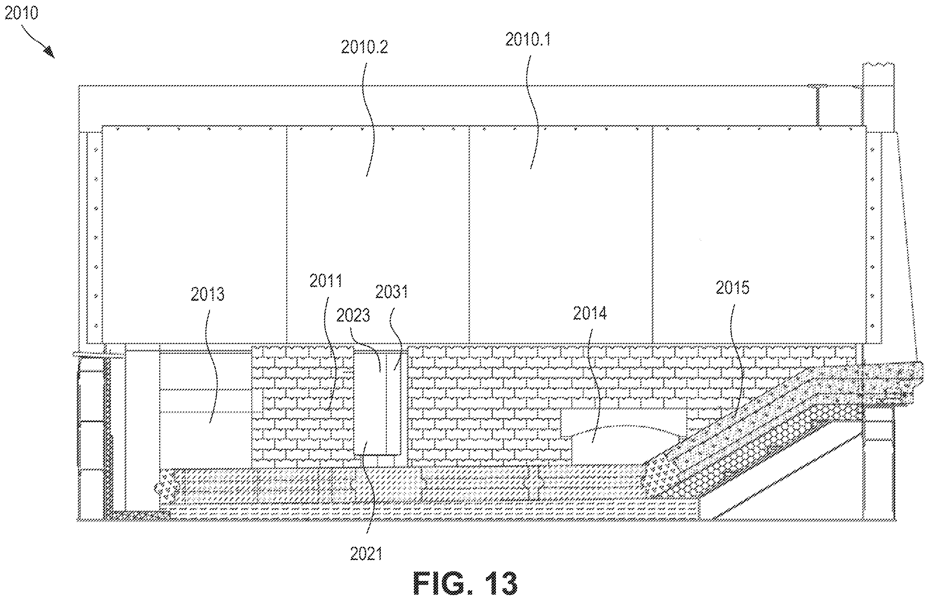

FIGS. 11-14 illustrate another example of a furnace 2010 according to embodiments. The furnace 2010 includes a main hearth 2010.1 and a sidewell 2011, which may be similar to the main hearth 10.1 and the sidewell 11 of the furnace 10. Similar to the furnace 10, the furnace 2010 includes a main hearth ramp 2010.3. Heating elements 2019 (including but not limited to burners) may be supported relative to the main hearth 2010.1 and direct heat into the main hearth 2010.1.

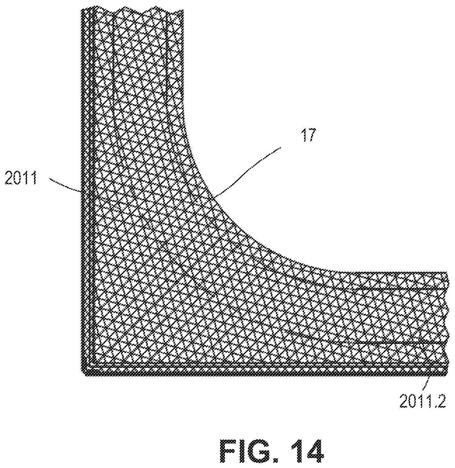

A divider wall 2010.2 separates the main hearth 2010.1 from the sidewell 2011. The divider wall 2010.2 includes an entrance port 2013 and an exit port 2014, which may be sized, dimensioned, or otherwise controlled as discussed previously with respect to the entrance port 13 and the exit port 14. Similar to the sidewell 11, and as best illustrated in FIGS. 11 and 14, the sidewell 2011 includes the portion 17 with the radiused surface to direct and/or promote flow of molten metal to an impeller (the impeller is not shown in FIGS. 11-14 for simplicity). Similar to the sidewell 11, the sidewell 2011 may include a hearth ramp 2015 at an opposite end of the sidewell 11 from the entrance port 2013 and optionally beyond the exit port 2014. As best illustrated in FIG. 11, the distal wall 2011.2 of the sidewell 2011 does not include a ramp (such as the ramp 11.3). In other words, the distal wall 2011.2 extends all the way across and does not include an offset portion.

As best illustrated in FIGS. 11-13, in various examples, the sidewell 2011 includes a divider wall 2021 within the sidewell 2011 between the entrance port 2013 and the exit port 2014. The divider wall 2021 may include a curved or radiused surface 2023. In some examples, the curvature of the surface 2023 may depend on the curvature of the impeller, although it need not in other examples. The divider wall 2021 may extend a predetermined distance into the sidewell 2011 (and away from the divider wall 2010.2) such that the divider wall 2021 defines a flow passage 2033 between an end 2031 of the divider wall 2021 and a wall 2011.2 of the sidewell 2011 that molten metal flows through after being mixed by the impeller and before exiting via the exit port 2014. The flow passage 2033 has a passage width 2027 that is less than a width 2029 of the sidewell 2011. In various examples, the curvature of the surface 2023 of the divider wall 2021 and the flow passage 2033 defined by the divider wall 2021 may improve the mixing of molten metal by the impeller and may improve the overall flow of molten metal through the sidewell 2011.

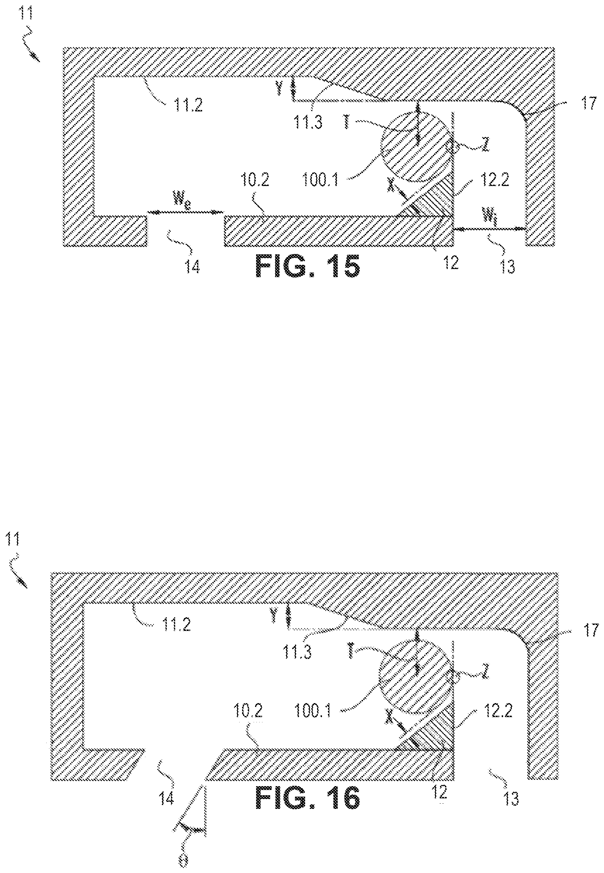

FIGS. 15 and 16 are each top views of sidewells of furnaces according to various embodiments. The sidewell 11 illustrated in FIG. 15 is substantially similar to the sidewell 11 illustrated in FIG. 2B and the sidewell 11 illustrated in FIG. 16 is substantially similar to the sidewell 11 illustrated in FIG. 2E except that the sidewells 11 in FIGS. 15 and 16, respectively, each include a ramp 11.3. As illustrated in FIGS. 15 and 16, with the ramp 11.3, the portion of the distal wall 11.2 adjacent to the impeller 100 protrudes further towards the center of the sidewell 11 (*i.e.*, closer to the impeller 100) than other portions of the distal wall 11.2. The offset distance of the ramp 11.3 (length Y) may be approximately 3.94" to 19.7" (10 cm to 50 cm), although other lengths may be used. In other examples, such as in FIGS. 2B and 2E, the length Y may be 0 cm, or the sidewell 11 does not have an offset portion. In some examples, length Y is approximately 11.8" (30 cm). The distance between the center of the impeller 100 and the distal wall 11.2 of the sidewell 11 (length T) may be approximately 19.7" to 39.4" (50 cm to 100 cm), although other distances may be used. In some examples, length T is approximately 29.9" (76 cm).

## Claims

1. A scrap submergence device (1000) for mixing molten metal in a furnace (10), the scrap submergence device (1000) comprising:

   an upper structure (300);
   a shaft (200) extending down from the upper structure (300); and
   an impeller (100) at a lower end of the shaft (200), the impeller (100) comprising:

   a plurality of blades (101), each of the plurality of blades (101) having a blade height and a blade radius; and
   a plate (102),
   wherein a ratio of the blade height to the blade radius is 0.3 to 1, and at least one of the plurality of blades (101) comprises a radial extension (104) extending in a tangential direction from an outermost edge (101.3) on a leading face (31) of the at least one of the plurality of blades (101).

2. The scrap submergence device (1000) of claim 1, wherein:

the plate (102) comprises a width that is less than a total diameter of the plurality of blades (101); and a lower surface of the plate (102) is aligned with a lower surface of each of the plurality of blades (101).

3. The scrap submergence device (1000) of claim 1 or 2,

wherein at least one of the plurality of blades (101) comprises an upper extension (106) extending in a tangential direction from an upper edge on a leading face (31) of the at least one of the plurality of blades (101), and/or wherein the impeller (100) comprises a ring (105) extending around a perimeter of the impeller (100), wherein the ring (105) is attached to an outermost edge of each of the plurality of blades (101).

4. The scrap submergence device (1000) of any one of claims 1 to 3, wherein the shaft (200) comprises:

a shoulder (201) with a larger outer dimension than a remainder of the shaft (200); and a coupling (202) disposed above the shoulder (201).

5. The scrap submergence device (1000) of claim of any one of claims 1 to 4 wherein the scrap submergence device (1000) preferably further comprises an arm (12.4) extending from the upper structure (300), wherein the deflector block (12, 12a) is preferably removably attached to the arm (12.4).

**Patentansprüche**

1. Schrotteintauchvorrichtung (1000) zum Mischen von geschmolzenem Metall in einem Ofen (10), wobei die Schrotteintauchvorrichtung (1000) umfasst:

eine obere Struktur (300); einen Schaft (200), welcher sich von der oberen Struktur (300) nach unten erstreckt; und

einen Impeller (100) an einem unteren Ende des Schafts (200), wobei der Impeller (100) umfasst:

eine Mehrzahl von Flügeln (101), wobei jeder der Mehrzahl von Flügeln (101) eine Flügelhöhe und einen Flügelradius aufweist; und eine Platte (102), wobei ein Verhältnis der Flügelhöhe zu dem Flügelradius 0,3 bis 1 beträgt und wenigstens einer der Mehrzahl von Flügeln (101) einen radialen Fortsatz (104) umfasst, welcher sich in einer tangentialen Richtung von einem äußersten Rand (101.3) an einer vorderen Fläche (31) des wenigstens einen der Mehrzahl von Flügeln (101) erstreckt.

2. Schrotteintauchvorrichtung (1000) nach Anspruch 1, wobei:

die Platte (102) eine Breite umfasst, welche geringer als ein Gesamtdurchmesser der Mehrzahl von Flügeln (101) ist; und eine untere Oberfläche der Platte (102) mit einer unteren Oberfläche jeder der Mehrzahl von Flügeln (101) ausgerichtet ist.

3. Schrotteintauchvorrichtung (1000) nach Anspruch 1 oder 2,

wobei wenigstens einer der Mehrzahl von Flügeln (101) einen oberen Fortsatz (106) umfasst, welcher sich in einer tangentialen Richtung von einem oberen Rand an einer vorderen Fläche (31) des wenigstens einen der Mehrzahl von Flügeln (101) erstreckt, und/oder wobei der Impeller (100) einen Ring (105) umfasst, welcher sich um einen Umfang des Impellers (100) herum erstreckt, wobei der Ring (105) an einem äußersten Rand jedes der Mehrzahl von Flügeln (101) angebracht ist.

4. Schrotteintauchvorrichtung (1000) nach einem der Ansprüche 1 bis 3, wobei der Schaft (200) umfasst:

eine Schulter (201) mit einer größeren Außenabmessung als ein Rest des Schafts (200); und eine Kopplung (202), welche oberhalb der Schulter (201) angeordnet ist.

5. Schrotteintauchvorrichtung (1000) nach einem der Ansprüche 1 bis 4, wobei die Schrotteintauchvorrichtung (1000) vorzugsweise ferner einen Arm (12.4) umfasst, welcher sich von der oberen Struktur (300) erstreckt, wobei der Deflektor-Block (12, 12a) vorzugsweise abnehmbar an dem Arm (12.4) angebracht ist.

**Revendications**

1. Dispositif d'immersion de ferraille (1000) pour mélanger du métal en fusion dans un four (10), le dispositif d'immersion de ferraille (1000) comprenant :

   une structure supérieure (300) ;
   un arbre (200) s'étendant vers le bas à partir de la structure supérieure (300) ; et
   une roue à aubes (100) à l'extrémité inférieure de l'arbre (200), la roue à aubes (100) comprenant :

   une pluralité d'aubes (101), chacune de la pluralité d'aubes (101) ayant une hauteur d'aube et un rayon d'aube ; et
   un plateau (102),
   dans lequel le rapport entre la hauteur d'aube et le rayon d'aube est de 0,3 à 1, et l'une au moins des aubes (101) présente une extension radiale (104) s'étendant dans une direction tangentielle à partir d'un bord (101.3) situé le plus à l'extérieur sur une face d'attaque (31) d'au moins une aube de la pluralité d'aubes (101).

2. Dispositif d'immersion de ferraille (1000) selon la revendication 1,
   dans lequel :

   le plateau (102) présente une largeur inférieure au diamètre total de la pluralité d'aubes (101) ; et
   une surface inférieure du plateau (102) est alignée avec une surface inférieure de chacune de la pluralité d'aubes (101).

3. Dispositif d'immersion de ferraille (1000) selon la revendication 1 ou 2,

   dans lequel l'une au moins de la pluralité d'aubes (101) présente une extension supérieure (106) s'étendant dans une direction tangentielle à partir d'un bord supérieur sur une face d'attaque (31) de ladite au moins une aube de la pluralité d'aubes (101), et/ou
   la roue à aubes (100) comprend un anneau (105) s'étendant autour d'un périmètre de la roue à aubes (100),
   l'anneau (105) est fixé à un bord situé le plus à l'extérieur de chacune de la pluralité d'aubes (101).

4. Dispositif d'immersion de ferraille (1000) selon l'une des revendications 1 à 3,
   dans lequel l'arbre (200) comprend :

   un épaulement (201) dont la dimension extérieure est supérieure à celle du reste de l'arbre (200) ; et
un accouplement (202) disposé au-dessus de l'épaulement (201).

5. Dispositif d'immersion de ferraille (1000) selon l'une des revendications 1 à 4,

   dans lequel le dispositif d'immersion de ferraille (1000) comprend de préférence un bras (12.4) s'étendant à partir de la structure supérieure (300),
   le bloc déflecteur (12, 12a) est de préférence fixé de manière amovible au bras (12.4).

FIG. 1

FIG. 2A

FIG. 2B

FIG. 2C

FIG. 2D

FIG. 2E

FIG. 2F

FIG. 3

12a

12a.1

**FIG. 4**

FIG. 5A

FIG. 5B

FIG. 5C

EP 4 143 493 B1

FIG. 6

21

FIG. 7A

FIG. 7B

FIG. 8

FIG. 9

FIG. 10A

FIG. 10B

**FIG. 10C**

FIG. 11

**FIG. 12**

FIG. 13

FIG. 14

11

11.2

Y

11.3   T

10.2   100.1

W₂

X

Z

17

12.2

Wₛ

14   **FIG. 15**   12   13

11

11.2

Y

11.3   T

10.2   100.1

X

Z

17

12.2

14   **FIG. 16**   12   13

ϑ

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63017409
- US 2011074072 A1
- WO 2015042712 A1
- CN 110699508 A
- WO 2019045419 A1